# EUROPEAN PATENT APPLICATION

(11) **EP 4 714 583 A2**
(43) Date of publication of application: **25.03.2026**
(21) Application number: 26157124.4
(22) Date of filing: 25.08.2021
(51) Int. Cl.: B23K 26/16

(54) **HANDHELD LASER SYSTEM AND METHOD**

(30) Priority: 25.08.2020 US 202063069816 P; 08.10.2020 US 202063089113 P
(62) Divisional of application: 21862631.5
(71) Applicant: IPG Photonics Corporation, Marlborough, MA 01752 (US)
(72) Inventor: PINARD, Adam, Marlborough, 01752 (US); SHKURIKHIN, Oleg, Marlborough, 01752 (US); MARKUSHOV, Iurii, Marlborough, 01752 (US); LESLIE, Walter, Marlborough, 01752 (US); DELPHIA, Adrian, Marlborough, 01752 (US); DAPSHI, Elvis, Marlborough, 01752 (US); LY, Nam, Marlborough, 01752 (US); GRAPOV, Yuri, Marlborough, 01752 (US)
(74) Representative: Peterreins Schley

(57) **Abstract**

One aspect of the present disclosure relates to a handheld laser system, comprising a laser source configured to generate laser radiation at a wavelength for performing a material processing operation on a workpiece material with a laser beam of the generated laser radiation. The handheld laser system also comprises a housing configured as a handheld apparatus having an outlet for the laser beam, the handheld apparatus configured with one or more inlets for a shielding gas so as to be gas-cooled, the shielding gas exiting the handheld apparatus at a gas outlet to provide the shielding gas to the workpiece material. In addition, the handheld laser system comprises an air-cooling system coupled to the laser source for dissipating heat from the laser source.

## Description

### REFERENCE TO PRIOR APPLICATIONS

This application claims the benefit of U.S. Provisional Patent Application No. 63/069,816 filed on August 25, 2020, and to U.S. Provisional Patent Application No. 63/089,113 filed on October 8, 2020, each of which is herein incorporated by reference in its entirety.

### BACKGROUND

### Technical Field

The technical field relates generally to a handheld laser device that can be used for material processing operations, and more specifically to a handheld laser device configured with a plasma sensor.

### Background Discussion

The use of lasers in material processing applications has increased over the last four decades and is becoming increasingly important in modern manufacturing processes. Lasers are used in a variety of applications, including welding, cutting, drilling, surface hardening, and additive manufacturing. Fiber lasers in particular offer several advantages over other laser technologies, such as excimer or CO₂ systems. For example, fiber laser technology provides lower maintenance costs by eliminating downtime, reducing the spares inventory, decreasing the cost of processing gas and electricity, and in many instances lowering labor costs associated with keeping older types of lasers operational. Besides a lower cost of ownership, fiber laser technology also offers high wall plug efficiencies, long diode lifetimes, minimal maintenance, and versatility since the same unit can often cut, weld, or drill. Because of their physical size, the fiber laser can also be easily transported. In addition, they offer low beam divergence and do not require warm-up since there is no spot size change with power, and possess a large dynamic range.

Handheld laser devices have up until now have been used in low power applications, including medical devices and diagnostic instrumentation. While higher power lasers (e.g., at least 1 kW) have been conventionally used for industrial cutting and welding in the industrial community, these systems have typically been too expensive for many smaller machine shops or other smaller-scale end users. However, over time the average power of laser diodes has increased significantly while their average price per watt has decreased exponentially. In addition, technological advances have been made in higher power laser systems. These factors make it more feasible to implement higher power lasers into smaller material processing systems, such as handheld laser devices. Such systems would not only be desirable for smaller industrial shops, but these devices would be especially useful in applications where larger systems are impractical or impossible to use. For example, these portable, i.e., easy to move devices are useful in small work spaces, and can be used in applications where there are irregular geometries or shapes. Hindering at least one of these objectives is the conventional use of large water-based or liquid refrigerant-based chillers used to cool the lasers. The large size associated with these systems makes it not only more difficult to maneuver the system, but may make it impossible to use in small work spaces.

With increasing laser power, so are hazards associated with laser light. Since laser light used in machining operations such as welding and cutting (e.g., infrared) is invisible to the human eye, the hazards may not be readily apparent to a user. If there is a problem associated with the laser energy emanating from the handheld device, this may not be readily apparent to the user. For example, if the laser energy is reflected off the workpiece material instead of being absorbed, the reflected energy can potentially harm the user, as they can unintentionally expose themselves to prolonged invisible radiation since they believe that the laser is not functioning.

### SUMMARY

Aspects and non-limiting examples are directed to methods and systems for material processing operations using a handheld laser device.

In accordance with one aspect of the disclosure, a handheld laser system is provided that includes a laser source configured to generate laser radiation at a wavelength for performing a material processing operation on a workpiece material with a laser beam of the generated laser radiation, a plasma sensor configured to detect plasma emitted from the workpiece material during a material processing operation, and a controller coupled to the plasma sensor and configured to: compare an optical intensity value obtained by the plasma sensor to a threshold value at a time when a predetermined time period has elapsed after the material processing operation has commenced, and produce a control command based on the comparison.

In some aspects, the control command turns off power to the laser source when the optical intensity value is lower than the threshold value, and maintains power to the laser source when the optical intensity value is at or greater than the threshold value.

In further aspects, the predetermined time period is at least 100 microseconds (µs).

In some aspects, the handheld laser system further includes at least one optical filter configured to block light at the wavelength of the emitted laser light from reaching the plasma sensor.

In some aspects, the handheld laser system further includes an air-cooling system coupled to the laser source for dissipating heat.

In further aspects, the handheld laser system further includes a laser module that houses the laser source, the air-cooling system, and the controller.

In further aspects, the laser module is configured to be mounted to a movable cart.

In some aspects, the handheld laser system further includes a housing configured as a handheld apparatus having an outlet for the laser beam.

In further aspects, the handheld laser system further includes at least one movable mirror positioned within the housing, the at least one movable mirror configured to wobble the laser beam.

In further aspects, the handheld apparatus is of one-piece construction.

In further aspects, the handheld apparatus is configured with a modular attachment system for a nozzle.

In further aspects, the handheld apparatus is configured to be gas-cooled.

In further aspects, the handheld apparatus is configured to weigh less than about 1 kilogram (kg).

In further aspects, the plasma sensor is positioned within an interior of the handheld apparatus.

In further aspects, the handheld laser system further includes an optical fiber coupling the handheld apparatus to the laser source.

In some aspects, the handheld apparatus further includes a trigger coupled to at least one of the controller and a source of shield gas that controls activation of the shield gas.

In further aspects, the trigger is a first trigger and the handheld apparatus further comprises a second trigger coupled to at least one of the controller and the laser source that controls activation of the laser source.

In further aspects, the first and second triggers are configured in a two-stage arrangement such that the second trigger will not activate the laser source unless the first trigger is activated.

In some aspects, the laser beam has a power of at least 1 kW.

In some aspects, the laser beam has a power of about 1.5 kW.

In some aspects, the laser beam has a power within a range of 500 W to 3 kW inclusive.

In some aspects, the laser source is configured to: generate laser radiation in a continuous wave (CW) mode that has an output power, and generate laser radiation in a high peak power (HPP) mode characterized by having a maximum peak power that is less than twice the output power of the CW mode, a maximum duty cycle of about 20%, and a maximum pulse-repetition frequency of about 1500 Hz.

In some aspects, the wavelength is infrared (IR) light and the at least one optical filter is configured as an IR suppression filter.

In accordance with another aspect of the disclosure a method is provided that includes directing a laser beam from a laser source onto a workpiece material, activating a plasma sensor configured to detect plasma emitted from the workpiece material during a material processing operation, comparing an optical intensity value obtained by the plasma sensor to a threshold value at a time when a predetermined time period has elapsed after the material processing operation has commenced, and producing a control command based on the comparison.

In some aspects, the control command powers off the laser source when the optical intensity value is lower than the threshold value and maintains power to the laser source when the optical intensity value is at or greater than the threshold value.

In further aspects, the method includes positioning at least one optical filter configured to block light at a wavelength of the laser source such that light at the wavelength of the laser source does not reach the plasma sensor.

In further aspects, the method includes providing a housing configured as a handheld apparatus having an outlet for the laser beam.

In further aspects, the method includes providing an optical fiber that couples the handheld apparatus to the laser source.

In some aspects, the method includes wobbling the laser beam.

In accordance with another aspect of the disclosure, a handheld laser system is provided that includes a laser source configured to generate laser radiation at a wavelength for performing a material processing operation on a workpiece material with a laser beam of the generated laser radiation, and a housing configured as a handheld apparatus having an outlet for the laser beam, the handheld apparatus configured to be gas-cooled.

In further aspects, the handheld laser system includes an optical fiber coupling the handheld apparatus to the laser source.

In some aspects, the handheld apparatus is of one-piece construction.

In some aspects, handheld apparatus is configured with a modular attachment system for a nozzle.

In some aspects, the handheld laser system further includes an air-cooling system coupled to the laser source for dissipating heat.

In some aspects, the handheld laser system further includes a laser module that houses the laser source, the air-cooling system, and the controller.

In further aspects, the laser module is configured to be mounted to a movable cart.

In some aspects, the laser beam has a power of at least 1 kW.

Still other aspects, embodiments, and advantages of these example aspects and embodiments, are discussed in detail below. Moreover, it is to be understood that both the foregoing information and the following detailed description are merely illustrative examples of various aspects and embodiments, and are intended to provide an overview or framework for understanding the nature and character of the claimed aspects and embodiments. Embodiments disclosed herein may be combined with other embodiments, and references to "an embodiment," "an example," "some embodiments," "some examples," "an alternate embodiment," "various embodiments," "one embodiment," "at least one embodiment," "this and other embodiments," "certain embodiments," or the like are not necessarily mutually exclusive and are intended to indicate that a particular feature, structure, or characteristic described may be included in at least one embodiment. The appearances of such terms herein are not necessarily all referring to the same embodiment.

### BRIEF DESCRIPTION OF DRAWINGS

Various aspects of one or more embodiments are discussed below with reference to the accompanying figures, which are not intended to be drawn to scale. The figures are included to provide an illustration and a further understanding of the various aspects and embodiments, and are incorporated in and constitute a part of this specification, but are not intended as a definition of the limits of any particular embodiment. The drawings, together with the remainder of the specification, serve to explain principles and operations of the described and claimed aspects and embodiments. In the figures, each identical or nearly identical component that is illustrated in various figures is represented by a like numeral. For purposes of clarity, not every component may be labeled in every figure. In the figures:
FIG. 1 is a schematic representation of one example of a handheld laser system according to aspects of the present disclosure;
FIG. 2 is another schematic representation of an example of a handheld laser system according to aspects of the present disclosure;
FIGS. 3A-3F illustrate various views of one example of a handheld laser apparatus according to aspects of the present disclosure; and
FIG. 4 is a schematic diagram of a wobbling laser beam emanating from the tip of a handheld apparatus in accordance with aspects of the invention.

### DETAILED DESCRIPTION

As discussed above, technical and economic advances are driving demand for handheld lasers with powers of at least 1 kW. Handheld laser devices with these power levels also present a separate set of safety issues. For instance, the user of such a handheld device may mistakenly think laser energy is not being emitted since there is no evidence of processing taking place on the workpiece material. This could be caused by any one of a number of different things, such as a damaged laser head, the type of workpiece material being processed, or the method or manner that the user is following during the processing operation. As a consequence, instead of being absorbed in the workpiece material, the laser energy is reflected off the material. The user may mistakenly believe that the laser is not functioning since the radiation is invisible to them, and as a consequence unwittingly subject themselves to prolonged radiation exposure.

The present disclosure discloses a handheld laser device that addresses the above-mentioned problem. The handheld laser device is configured with a plasma sensor that is capable of rapidly detecting non-laser wavelength plasma that is created during a proper material processing operation. When something prevents normal processing from occurring, such as an improperly focused laser beam on the workpiece material, a controller shuts the laser off. This prevents prolonged exposure to laser light by a user. In addition, according to some embodiments, the device is air-cooled which greatly reduces the size of the system as compared to water or liquid refrigerant-based laser cooling systems. As discussed below, in at least one embodiment the laser module associated with the handheld component can fit on a standard welding cart. This reduced footprint is advantageous in many processing environments where available workspace is minimal and/or a more portable unit is desirable. It is to be appreciated that although air-cooled laser systems are described herein, the scope of this disclosure also extends to water-cooled systems, especially in instances where higher powers (e.g., multi-kW) are employed.

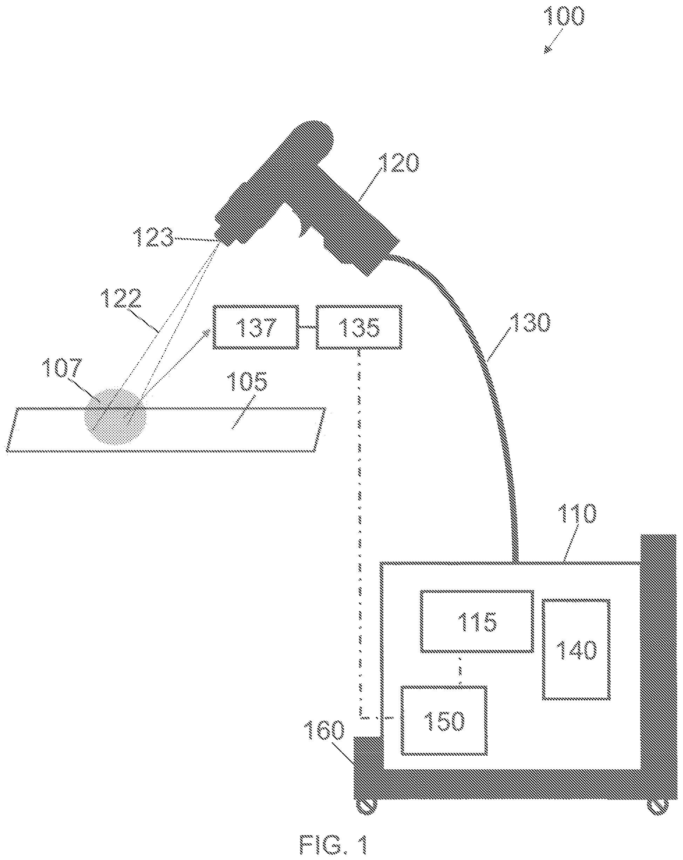

FIG. 1 illustrates a schematic of one example of a handheld laser system 100 for performing a material processing operation on a workpiece 105. Non-limiting examples of material processing operations include cutting, welding, brazing, surface modification (e.g., material removal such as cleaning), drilling, and in some instances, cladding. The handheld laser system 100 (also referred to herein as "laser system" or simply "system") includes a laser source 115, a plasma sensor 135, and a controller 150. The handheld laser system 100 further comprises a housing that is configured as a handheld apparatus 120 (also referred to herein as a handheld device), and an optical fiber 130 that couples the laser source 115 to the handheld apparatus 120. According to at least one embodiment, the handheld laser system 100 further includes a laser module 110 that houses the laser source 115, and in some instances, the controller 150. The laser module 110 may also include an air-cooling system 140 that cools the laser source 115. In certain embodiments, the handheld laser system 100 also includes at least one optical filter 137.

The laser source 115 is configured to generate laser radiation at a wavelength for performing a material processing operation on the workpiece 105 with a laser beam 122 of the generated laser radiation. The laser source 115 may include a Ytterbium (Yb) laser capable of generating a laser within the near-infrared spectral range (e.g., a center wavelength ranging from about 1030-1080 nm). Other lasers are also within the scope of this disclosure, including Yb lasers in the 978-1020 nm range, Erbium lasers, and Thulium lasers. As will be appreciated, laser radiation generated and emitted by the laser source 115 is propagated by an optical fiber 130 that extends from the laser source 115 through the handheld apparatus 120, where the laser radiation in the form of beam 122 is emitted through outlet 123. The laser source 115 may comprise one or more laser diodes that generate the laser radiation that is propagated by the optical fiber 130. As such, the assembly can be collectively referred to as a fiber laser. In some embodiments, the optical fiber 130 has a length of at least 3 meters (m), and can be 5 m or even 10 m in length. Shorter and longer lengths are also within the scope of this disclosure. In accordance with various embodiments, different applications may require differently sized (e.g., core diameter) optical fiber 130. For instance, systems that output single mode (SM) laser radiation will have fiber core diameters that are smaller than those that generate multimode (MM) laser radiation. System 100 can be configured to accommodate optical fiber 130 of different sizes depending on the desired output mode.

According to at least one embodiment, the laser beam 122 generated by the laser source 115 has a power of at least 1 kW, and according to another embodiment the laser beam 122 has a power of at least 1.5 kW. In other embodiments, the laser beam 122 has a power of about 2 kW. In still other embodiments, the laser beam 122 has a power of about 3 kW. Lower and higher output powers are also within the scope of this disclosure. For instance, in some applications, the laser source 115 is configured to generate a laser beam 122 having a power of less than 1 kW. In accordance with at least one embodiment, the laser source 115 is configured to generate a laser beam 122 having a power within a range of 500 W to 3 kW inclusive. In another embodiment, the laser beam 122 has a power within a range of 1 kW to 3 kW inclusive. In another embodiment, the laser source 115 is configured to generate a laser beam 122 having a power within a range of 500 W to 1 kW inclusive.

The laser source 115 may be configured to emit or otherwise generate single mode (SM) or multimode (MM) light and may be operated in continuous or pulsed mode. According to some embodiments, the laser source 115 is configured to generate pulsed laser light having a high peak power (HPP). This HPP mode can include operating a continuous wave (CW) laser in pulsed mode with up to a two-fold increase in peak power in comparison with CW average power for short duty cycles (e.g., 0-20%). In some embodiments, HPP mode has a maximum duty cycle of about 20% (inclusive). In certain embodiments, for HPP mode the duty cycle is within a range of 0-20% inclusive, in other embodiments the duty cycle is within a range of 0.1-20% inclusive, in other embodiments the duty cycle is within a range of 1-20% inclusive, and in still other embodiments the duty cycle is within a range of 10-20% inclusive. The HPP mode can also be characterized by having a maximum laser pulse frequency (pulse-repetition frequency) of 1500 Hz (inclusive), although higher laser pulse frequencies are within the scope of this disclosure. According to one non-limiting embodiment, the laser source 115 is configured to generate laser radiation in a CW mode that has an output power, and to generate laser radiation in a HPP mode characterized by having a maximum peak power that is less than twice the output power of the CW mode, a maximum duty cycle of about 20%, and a maximum pulse-repetition frequency of about 1500 Hz. In one example, the peak power in HPP mode is 900 W. In another example, the peak power is 2500 W. In one example, the average CW power is about 1500 W. The HPP mode offers several advantages to the handheld laser, since this mode of operation allows for the ability to weld thicker parts and for the ability to weld highly reflective metals like copper. HPP also enhances cutting operations, since it punches through thick metals faster and creates a smaller opening, reducing the amount of debris that make their way to the top and consequently reduces the amount of spatter. One non-limiting example of a laser configured as a HPP laser includes the YLS-HPP and YLR-HPP systems available from IPG Photonics (Oxford, Massachusetts). In accordance with one embodiment, the laser source 115 and/or laser beam 122 can be classified as a high level class IV (IEC Laser Classification) laser.

According to some embodiments, the laser source 115 is configured as a Fabry-Perot MM laser as described in U.S. patent no. 9,647,410, which is owned by Applicant and fully incorporated by reference. Such a system may comprise a fiber oscillator that comprises a MM active fiber having a monolithic core that is doped with light emitters, two MM passive fibers that are spliced to respective opposite ends of the MM active fiber, and MM fiber Bragg gratings (FBGs) that are written into the respective cores of the MM passive fibers that function to define a resonant cavity therebetween. The laser radiation that is generated emits at a desired wavelength and has a spectral linewidth within a range of about 0.02 nm to about 10 nm. In accordance with a further aspect, a pump can also be included that side pumps the active fiber.

In some embodiments, the laser source may be configured to generate SM laser radiation. In such instances, the spot size of the laser beam may be smaller (e.g., at least 5x smaller) than that generated for MM laser radiation, and offers the advantage of being useful for copper welding.

The housing configured as a handheld apparatus 120 has an outlet 123 or exit for the laser beam 122. Throughout the present description, the term "handheld" is understood to refer to a laser device that is both small and light enough to be readily held in and operated by one or both hands of a user. Furthermore, the handheld laser device should be portable, so that it may be easily moved around by the user during laser processing. However, while embodiments of the present invention are referred to as "handheld" and may be used as standalone portable devices, the handheld laser device may, in some embodiments, be connected to and used in combination with stationary equipment.

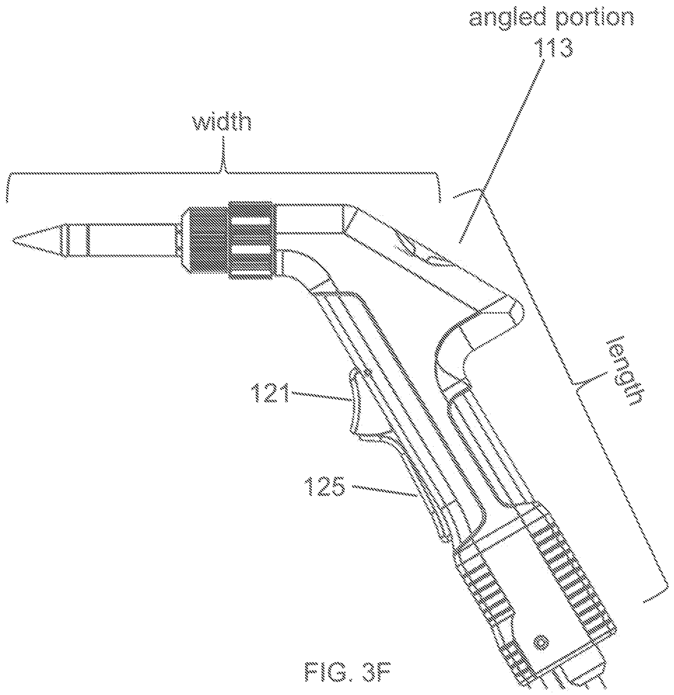

In accordance with certain embodiments, the handheld apparatus 120 has a weight of less than 5 pounds (without fiber), and in some embodiments, the handheld apparatus 120 has a weight of less than 3 pounds. According to one embodiment, the handheld apparatus 120 has a weight of less than 1 kilogram (kg). In addition, the handheld apparatus 120 has length and width dimensions of less than 12 inches, e.g., see the side view perspective of the handheld apparatus 120 in FIG. 3F. In one example, the handheld apparatus 120 has a width dimension of less than 10 inches. The entire system 100, according to some embodiments, has a maximum weight of 53 kg (118 pounds).

In accordance with at least one embodiment, the handheld apparatus 120 is of one-piece construction (also referred to as monolithic or integrated construction). The exterior of the handheld apparatus 120 is formed of a single integrated material, and not bolted or otherwise fastened together from separate sections. This type of construction allows for several advantages. For one thing, one-piece construction provides a more sealed internal environment when compared against devices configured with multi-part construction that are mechanically fastened together. This feature enhances protection of the internal components to the handheld apparatus 120, e.g., lenses and other optical components, optical fiber, gas lines, etc., and allows for higher output powers by the device.

According to some embodiments, the handheld apparatus 120 is configured with a modular attachment system for a nozzle. This allows for the handheld apparatus 120 to function as a single "base" module, thus allowing substitution and flexibility in providing different attachment nozzles to the handheld apparatus 120 for various applications (e.g., cleaning, welding, drilling, cladding). This is implemented at least in part by the handheld apparatus 120 being configured to internally integrate several auxiliary and/or other components, such as shielding gas, a protective window(s), and safety features such as safety interlock conductors that are integrated within the interior of the handheld apparatus 120.

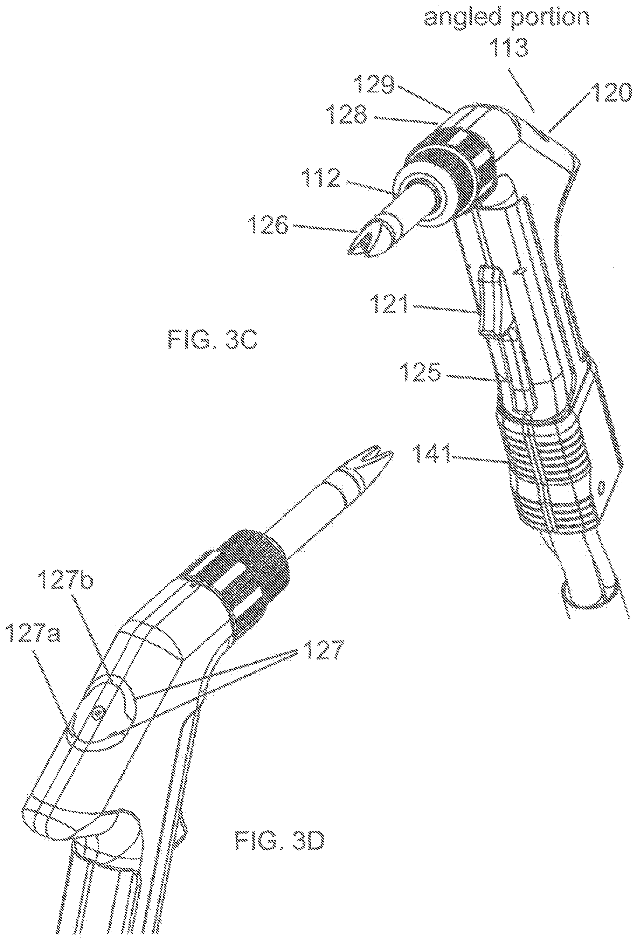

The handheld apparatus 120 is also configured to have a clear line of sight (for the operator) to the processing area (i.e., where the material processing operation is occurring on the surface of the workpiece) of the workpiece 105. This is evidenced by the views shown in FIGS. 3C and 3D, where the angled portion 113 (see also FIG. 3F) of the handheld apparatus 120 is configured to not impede the line of sight along the dimension of the device that includes the nozzle 112. No other portion or attachment impedes this line of sight either. This allows the user to have a direct line of sight down to the nozzle tip and allows for better visibility for the user of the processing area during material processing operations.

During a proper material processing operation, heat from the laser beam 122 of the laser source 115 causes the workpiece material 105 to generate a plasma 107. This plasma 107 radiates radiation at a different wavelength or wavelengths than that of the laser beam 122. For instance, light from the laser source 115 may emit at a wavelength in the IR range, whereas plasma generated from the processing beam may have wavelengths in the ultraviolet and visible regions of the electromagnetic spectrum. The plasma sensor 135 is configured to detect plasma emitted from the workpiece material 105 during a material processing operation. The plasma sensor 135 can be a photodetector, such as a photodiode. The photodetector converts the received plasma light into electrical energy (e.g., current signal) corresponding to optical intensity data. This optical intensity data is analyzed by the controller 150, as discussed in further detail below. As will be appreciated, current generated by the photodetector can then be converted to optical intensity data by the controller 150. According to at least one non-limiting example, the photodetector may have a bandwidth of up to or greater than approximately 1 MHz. However, it is to be appreciated that the bandwidth of the photodetector will depend on a particular application, as well as other components, including the length of the optical fiber 130. Unlike some conventional laser systems, the configuration described herein does not have to include an additional spectrometer, which makes the system cheaper and less complicated to operate.

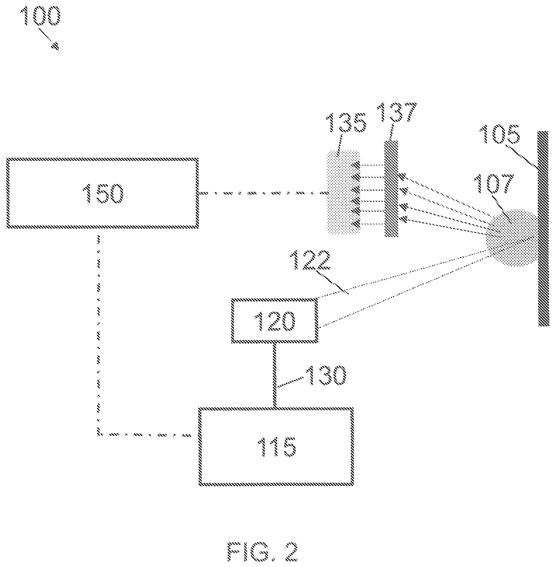

As shown in the example shown in FIGS. 1 and 2, at least one optical filter 137 is configured to block or otherwise absorb light at the wavelength of the emitted laser light (from the laser source 115) from reaching the plasma sensor 135. One or more optical filters 137 can be positioned upstream from the plasma sensor 135 and filter out wavelengths of light associated with the laser source 115, such as laser source light that reflects off the workpiece material 105. For instance, the at least one optical filter 137 may be configured to block about 99.9% of the laser source 115 light, such as 1070 nm (IR) light emitted from a Yb laser source 115. The optical filter 137 may therefore be configured as an IR suppression filter. The optical filter 137 is designed to allow wavelengths of light associated with the plasma to reach and be detected by the plasma sensor 135. For instance, infrared light wavelengths may be blocked by the optical filter 137, but visible and near-UV light are passed on through (e.g., 300 - 750 nm). According to one embodiment, the optical filter is constructed from KG3 glass (manufactured by Schott Optical Company). In some instances, the optical filter(s) 137 is integrated with the plasma sensor 135. One non-limiting example of such a device is the Series E OSD photodetector available from OSI Optoelectronics, Inc. of Hawthorne, California.

Although the examples discussed herein include an optical filter for blocking wavelength(s) of light associated with the processing laser, it is to be appreciated that in certain instances the plasma sensor may be configured to be insensitive to this wavelength(s).

The controller 150 is coupled to the plasma sensor 135, as indicated in FIGS. 1 and 2 such that it is capable of receiving optical intensity data from the plasma sensor 135. The controller 150 is also in communication with the laser source 115, including its power source such that the controller can control power (i.e., turn on and off power) to the laser source 115. As will be appreciated, the plasma sensor 135 may be used in combination with a logarithmic amplifier.

The controller 150 is configured to compare an optical intensity value obtained by the plasma sensor 135 to a threshold value at a time when a predetermined time period has elapsed after a material processing operation has commenced. Once the laser source 115 has been activated by the user and a material processing operation has begun, the clock starts for the predetermined time period. The predetermined time period can be pre-programmed into or otherwise determined by the controller. During this predetermined time period, optical intensity data is collected by the plasma detector 135 and sent to the controller 150.

The controller 150 is pre-programmed or otherwise configured to determine a threshold value for the optical intensity data associated with the plasma 107. This threshold value signifies a "normal" or otherwise acceptable optical intensity value of plasma generated during the material processing operation. The optical intensity may therefore be associated with a brightness or luminance of the plasma 107. The predetermined time period can be associated with a typical or otherwise acceptable amount of time for plasma 107 to be generated by the laser beam 122 during normal operation. This will depend on any one of a number of different factors, including the geometry and material of the workpiece, the power of the laser, as well as the type and configuration of the laser. According to some embodiments, the threshold value can also be dependent on the type of material being used as the workpiece and/or the type of application being performed. For instance, aluminum and steel may have different threshold values, and a cleaning operation may require a different threshold than welding and/or drilling operations. In accordance with certain embodiments the predetermined time period is less than one second, and in some instances can be in a range of 10 microseconds (µs) to 100 milliseconds (ms). According to one embodiment, the predetermined time period is at least 10 µs, and according to another embodiment, is at least 100 µs. In still other embodiments, the predetermined time period is at least one second. The time of analysis by the controller 150 can be (at a minimum) as soon as the predetermined time period has elapsed. In some instances, the plasma sensor 135 may collect a series of measured optical intensity values and the controller 150 then uses an average or maximum for performing the comparison to the threshold value. In other instances, the controller 150 can integrate measured optical intensity data and use this information for performing the comparison.

In accordance with some embodiments, the predetermined time period can also be a function of laser power. For instance, some applications may require (or it may be desired by the user) that the laser come up to full power prior to performing a material process operation. In some instances, this can extend the predetermined time period. For instance, the predetermined time period may be up to one second. In some instances, the time period for the laser to come up to full power may be considered or otherwise taken into account separately from the predetermined time period associated with plasma generation. The controller 150 can be configured to account for both.

The controller 150 is also configured to produce a control command based on the comparison between the optical intensity value of the plasma and the threshold value. For example, the controller 150 will turn off power to the laser source 115 when the optical intensity value is lower than the threshold value. This could signify that a laser beam 122 is indeed being generated, but it is not being absorbed by the workpiece material 105. This presents a potentially dangerous condition for the user. As discussed above, other problems can also cause plasma to not be created. The controller 150 will maintain power to the laser source 115 when the optical intensity value is at or greater than the threshold value. This would signify "normal" material processing conditions. Put another way, a threshold is set of expected light energy from the material processing operation, and the laser source 115 is shut off by the controller 150 if this expected light energy is not sensed within a specified time. The threshold value can depend on the application and other factors, including laser power, beam configuration, and workpiece materials and material geometries. In some instances, the threshold value will be a percentage (%) of an expected value, such as 10-50% of an expected value, e.g., an expected value at a particular laser power. It is to be appreciated that a noise filter may also be included or otherwise implemented by the controller 150 to filter out noise that impedes the ability for the controller 150 to process the optical intensity data. The threshold value can also be set to take into account or otherwise accommodate applications where the laser is modulated (i.e., laser power varies, such as pulsed mode). For instance, the laser power can be modulated when the laser is functioning with wobble capability (described in more detail below).

The controller 150 may be any computing device (or devices) that includes at least one processor, a memory, input/output components as will be readily appreciated by those of skill in the art, and is capable of receiving, transforming, and/or analyzing data from the plasma sensor 135. The controller 150 may include hardware and/or software capable of transforming and/or analyzing information from the plasma sensor 135 and other components of the device or system.

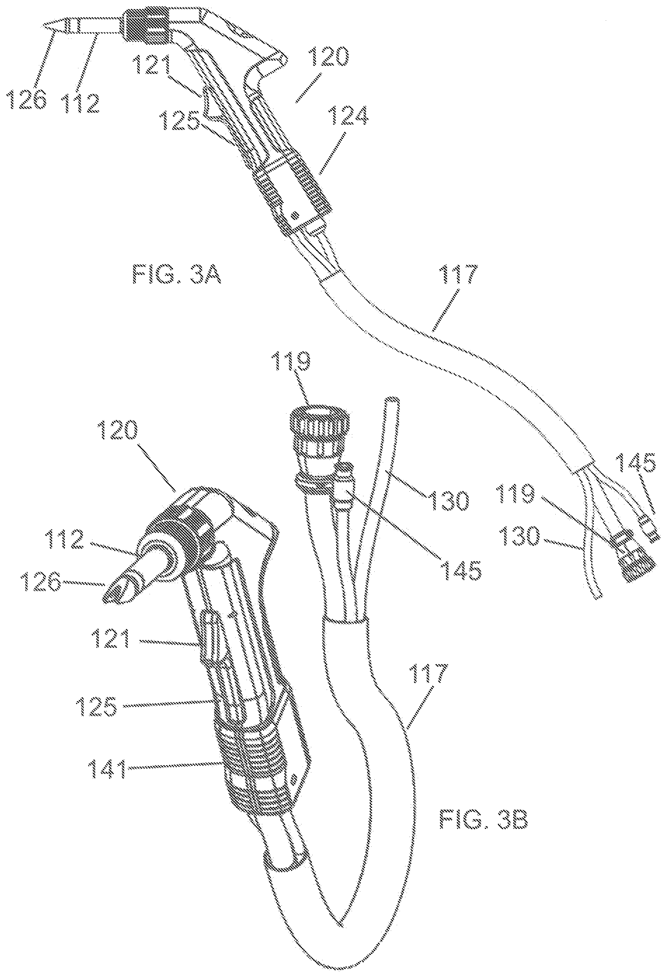

The handheld laser system 100 also includes an air-cooling system 140 that is coupled to the laser source 115 for purposes of dissipating heat. As mentioned above, air-cooling the device greatly reduces the size of the system as compared to water or liquid refrigerant-based laser cooling systems. According to at least one embodiment, system 100 can also include a laser module 110 that houses the air-cooling system 140, laser source 115, and controller 150. As indicated in FIG. 1, the laser module 110 can be configured to be mounted to a movable cart 160. In one example, the movable cart 160 has the dimensions of a standard welding cart, e.g., 36 inches or less in length and height, and 24 inches or less in width, although it is to be appreciated that some welding carts may have dimensions that slightly differ or otherwise differ from those listed herein. According to one embodiment, the laser module 110 itself can be sized to be less than 26 inches in length, less than 12.5 inches in width, and less than or equal to 21 inches in height. Referring now to FIGS. 3A-3F, there are various views of one non-limiting example of a handheld apparatus 120 which has a size and shape for user portability for the purpose of performing laser material processing operations such as welding or cutting. In this example embodiment, the handheld laser device resembles a gun-shape. According to some embodiments, system 100 can also include a wire feeder module (not shown in figures) that can be configured as a separate module, or in some instances be integrated with the laser module 110. The controller 150 can also be configured to control this wire feeder module.

In accordance with another aspect, the handheld apparatus 120 is configured to be gas-cooled. For instance, the handheld apparatus 120 may have one or more inlets for a gas such as a shielding gas (or air in certain applications) that is directed through one or more conduits within the interior of the handheld apparatus 120. This means that no cooling water (or other liquid cooling fluid) runs through the handheld apparatus 120. In one embodiment, shield gas is directed into two (or more) conduits or channels located at an inlet or otherwise located internally to the handheld apparatus (shown generally at 124 in FIG. 3A), and the conduits traverse the interior and exit at a gas outlet located within the vicinity of the outlet 123 for the laser beam. In some instances, the gas is shielding gas that can exit through the nozzle (e.g., nozzle 112 of FIGS. 3A-3C). As the gas traverses the interior of the handheld apparatus 120 it cools various heated components, such as optical components (e.g., lenses, mirrors) and/or electronic components such as motors. Feeding or otherwise directing a gas such as shielding gas through the housing/handheld apparatus 120 not only functions to cool heated internal components, but also adds to the nozzle modularity concept discussed above since no external tubing or wiring is required.

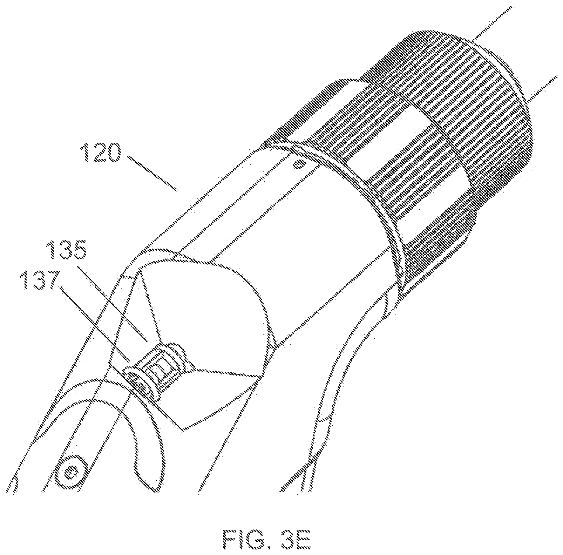

According to the example shown in FIGS. 3A-3F and in accordance with at least one embodiment, the plasma sensor 135 may be positioned within an interior of the handheld apparatus 120. This is most clearly shown in FIG. 3E, which includes a cutaway view of a portion of the interior of the handheld apparatus 120. In alternative embodiments, the plasma sensor 135 may be positioned on an exterior of the handheld apparatus 120.

According to at least one embodiment, the handheld apparatus 120 includes a trigger, button, or switch 125 (and may be referred to herein as simply a trigger) that is coupled to at least one of the controller 150 and a source of shield gas 145 that controls activation of the shield gas. For instance, as shown in FIGS. 3A and 3B, shield gas 145 can be guided through a tube within a flexible conduit 117 that also houses the optical fiber 130 and then through a nozzle 112 and removable processing tip 126 where it can be dispensed onto the workpiece material. As will be appreciated, the shield gas prevents the workpiece material from overheating during processing and/or to prevent debris from contaminating components of the handheld apparatus 120.

The handheld apparatus 120 also includes a trigger, button, or switch 121 (also referred to herein as simply a trigger) that is coupled to at least one of the controller 150 and the laser source 115 that controls activation of the laser source 115. As shown in FIGS. 3A and 3B, electrical cabling 119 positioned within the flexible conduit 117 can include wiring such that the trigger 121 is in communication with at least one of the controller 150 or the laser source 115 for controlling activation of the laser source 115.

In accordance with at least one embodiment, trigger 125 is a first trigger and trigger 121 is a second trigger that are configured in a two-stage arrangement such that the second trigger 121 will not activate the laser source 115 unless the first trigger 125 is already activated. For example, during operation, a user will first press trigger 125, to activate the shield gas. Then the user can press trigger 121. Second trigger 121 will only activate the laser source 115 if first trigger 125 is depressed. This prevents the workpiece material 105 and/or handheld apparatus 120 from being damaged.

One or both of the first trigger 125 and second trigger 121 can also be configured to have independent functionality. For example, the second trigger 121 can be released without releasing the first trigger 125 to shut off the laser, and then pressed again to turn on the laser if the first trigger 125 is still pressed. Furthermore, the first trigger 125 can be released regardless of the state of the second trigger 121 to shut off the laser.

As can be appreciated, trigger buttons can be part of an overall safety interlock system that includes several interlock loops. For instance, first trigger 125 can engage an interlock loop that closes when the first trigger 125 is pressed. The second trigger 121 can be a start button and an additional interlock loop that closes when pressed. Furthermore, pressing the first trigger 125 will turn on the shield gas if one or more other interlock loops are active, e.g., a key switch interlock loop that engages with the controller (processor) and laser, an emergency-stop loop, a fiber interlock loop, and an external interlock loop. When the first trigger is released, shield gas can be kept on for a predetermined duration of time (e.g., set by a user). The second trigger 121 can act as a start button for the laser. If the switch is open for more than a predetermined amount of time (e.g., 300 ms) and then trigger 121 is pressed, the laser will fire provided that the safety conditions have been satisfied and the shield gas has been on for a predetermined duration of time (and in some instances, as previously mentioned, the laser has reached a desired output power level).

As previously mentioned, the handheld laser can include several safety interlock loops that prevent operation of the laser if a failure is detected. Non-limiting examples of such interlock loops include a keyswitch/e-stop interlock loop, an external interlock loop (e.g., an interlock loop that engages with the laser system and a user's external safety mechanism), a fiber interlock loop, a head nozzle and safety clip interlock loop, a two-level trigger interlock loop, safety latch interlock loop, and current source interlock loop. Other non-limiting examples of safety interlock loops that may be included in the device include those associated with temperature (e.g., device and/or air temperature sensors), gas pressure, and/or additional photodetectors (e.g., for back reflection, dirty window, fiber fuse, etc.).

To assist the user, the handheld apparatus 120 may also be configured with one or more status lights 127 (e.g., see FIG. 3D) that inform the user of the operational status of the device. When the status lights 127 are not lit, this indicates a default state (i.e., no shield gas or laser light energy is being emitted from the handheld device). When the user depresses trigger 125, this activates the shield gas, which in turn activates status light 127a (or in the alternative, 127b). This signifies to the user that shield gas is being emitted. Once the user depresses trigger 121 (while still pressing trigger 125), this activates the laser source 115, which in turn activates status light 127b (or in the alternative 127a). When both status lights 127a and 127b are lit, this signifies to the user that the shield gas and laser light are being emitted from the handheld device 120. In some instances, this can signify to the controller 150 the start of the predetermined time period discussed above.

The handheld apparatus 120 may also be configured with one or more optical components, such as a replaceable window (indicated as 128 in FIG. 3C, but located internally) used to protect the internal components of the handheld apparatus 120, as well as a replaceable focus lens (indicated as 129 in FIG. 3C, but located internally), which is used to focus the laser beam 122 onto the workpiece surface. Other lenses (e.g., a collimating lens) or optical components, (e.g., beam splitters, mirrors) can also be implemented within the handheld device 120. In some instances, the handheld apparatus 120 may include a coupler or other waveguiding component for connecting to optical fiber 130. The handheld apparatus 120 can also include other components, such as a removable or sliding boot or collar 141 (e.g., see FIGS. 3B and 3C) that covers connections to components that are within a flexible conduit 117 that extends between the handheld apparatus 120 and the laser module 110, such as the optical fiber 130, shield gas 145, and/or electrical wiring 119.

The handheld laser system 100 may also include or otherwise implement one or more additional safety features. For example, in one embodiment, the handheld apparatus 120 is configured with a position sensor to ensure the nozzle or tip is touching a surface of the workpiece. For instance, a safety interlock implemented via the controller 150 can be incorporated with the removable processing tip 126 and a power source for the laser source 115. During use, the controller 150 will only activate power to the laser source 115 if the safety interlock is engaged, i.e., the nozzle or tip of the handheld apparatus 120 is engaged with the workpiece. In one example, this can be implemented by electrically connecting the workpiece and the head nozzle by clipping the workpiece to the laser system, e.g., a terminal on a panel of the system.

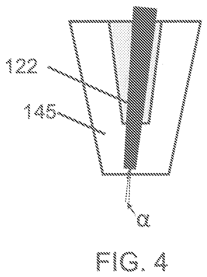

In accordance with at least one embodiment, the handheld apparatus 120 is also configured with beam wobbling capability. For instance, at least one movable mirror may be positioned within the housing 120 that is configured to wobble the laser beam 122. The wobble motion oscillates the laser beam 122 back and forth at a desired frequency (e.g., up to 300 Hz inclusive, minimum of 50 Hz, but it is to be appreciated that other values are within the scope of this disclosure). The movable mirror reflects and moves the laser beam, i.e., wobbles, the laser beam in one axis. In some embodiments, the at least one moveable mirror is configured to wobble the laser beam 122 within a field of view defined by a scan angle within a range of 0.1° to 3° inclusive. According to other embodiments, the scan angle is within a range of 0.1° to 7° inclusive, and in other embodiments, the scan angle is within a range of 0.1° to 12° inclusive. Larger scan angle ranges are also within the scope of this disclosure. The different ranges of scan angles may be associated with different types of applications. For example, in welding applications, the desired scan angle may be smaller than for cleaning operations. The wobbling capability is possible because the movable mirror is pivotable about one axis and is movable by a galvanometer motor, which is capable of reversing direction quickly. For instance, the controller 150 controls the movable mirror such that the mirror pivots the beam 122 within a scan angle alpha (α), as shown in FIG. 4, thereby allowing the beam to wobble. Depending on the focal length (non-limiting examples of which can be 80 mm, 100 mm, 120 mm), a 3° scan angle represents up to about 50 mrad of wobble. In some instances, the wobble length (wobble amplitude) has a minimum value of about 0.5 mm and a maximum value of about 5 mm, and in some instances has a maximum value of about 4 mm. As previously mentioned, larger scan angles are also within the scope of this disclosure, including 80 mrad of wobble, or 4.5°, and even larger wobble amplitudes are also feasible, especially for cleaning operations where the amplitude can be greater than 5 mm, such as 0-15 mm. In accordance with at least one aspect, a focus lens is positioned downstream from the mirror. The wobble motion can be one-dimensional, or two-dimensional if the device is equipped with two movable mirrors. Aspects of the wobbling capability are described in U.S. Patent Application No. 15/187,235, which is owned by Applicant and is fully incorporated herein by reference. According to some embodiments, the handheld apparatus 120 may also include a fixed mirror.

Besides material processing operations such as welding, as mentioned above the systems and methods described herein can also be applied to surface modification applications, such as material removal (laser ablation). In such instances, the device may be equipped with a wider nozzle than that used for welding, and the scan angle of the wobble may also increase. In addition, the laser source may be operated in pulsed mode or other modes, including the HPP mode of operation.

The aspects disclosed herein in accordance with the present invention, are not limited in their application to the details of construction and the arrangement of components set forth in the following description or illustrated in the accompanying drawings. These aspects are capable of assuming other embodiments and of being practiced or of being carried out in various ways. Examples of specific implementations are provided herein for illustrative purposes only and are not intended to be limiting. In particular, acts, components, elements, and features discussed in connection with any one or more embodiments are not intended to be excluded from a similar role in any other embodiments.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated reference is supplementary to that of this document; for irreconcilable inconsistencies, the term usage in this document controls.

Having thus described several aspects of at least one example, it is to be appreciated that various alterations, modifications, and improvements will readily occur to those skilled in the art. For instance, examples disclosed herein may also be used in other contexts. Such alterations, modifications, and improvements are intended to be part of this disclosure, and are intended to be within the scope of the examples discussed herein. Accordingly, the foregoing description and drawings are by way of example only.

### EMBODIMENTS

Although the present invention is defined in the attached claims, it should be understood that the present invention can also (alternatively) be defined in accordance with the following embodiments:
1. A handheld laser system, comprising:
   a laser source configured to generate laser radiation at a wavelength for performing a material processing operation on a workpiece material with a laser beam of the generated laser radiation;
   a plasma sensor configured to detect plasma emitted from the workpiece material during a material processing operation; and
   a controller coupled to the plasma sensor and configured to:
      compare an optical intensity value obtained by the plasma sensor to a threshold value at a time when a predetermined time period has elapsed after the material processing operation has commenced; and
      produce a control command based on the comparison.
2. The handheld laser system of embodiment 1, wherein the control command
   turns off power to the laser source when the optical intensity value is lower than the threshold value, and
   maintains power to the laser source when the optical intensity value is at or greater than the threshold value.
3. The handheld laser system of embodiment 2, wherein the predetermined time period is at least 100 microseconds (µs).
4. The handheld laser system of embodiment 1, further comprising at least one optical filter configured to block light at the wavelength of the emitted laser light from reaching the plasma sensor.
5. The handheld laser system of embodiment 1, further comprising an air-cooling system coupled to the laser source for dissipating heat.
6. The handheld laser system of embodiment 5, further comprising a laser module that houses the laser source, the air-cooling system, and the controller.
7. The handheld laser system of embodiment 6, wherein the laser module is configured to be mounted to a movable cart.
8. The handheld laser system of embodiment 1, further comprising a housing configured as a handheld apparatus having an outlet for the laser beam.
9. The handheld laser system of embodiment 8, wherein the handheld apparatus is of one-piece construction.
10. The handheld laser system of embodiment 8, wherein the handheld apparatus is configured with a modular attachment system for a nozzle.
11. The handheld laser system of embodiment 8, wherein the handheld apparatus is configured to be gas-cooled.
12. The handheld laser system of embodiment 8, wherein the handheld apparatus is configured to weigh less than about 1 kilogram (kg).
13. The handheld laser system of embodiment 8, wherein the plasma sensor is positioned within an interior of the handheld apparatus.
14. The handheld laser system of embodiment 8, further comprising an optical fiber coupling the handheld apparatus to the laser source.
15. The handheld laser system of embodiment 8, wherein the handheld apparatus comprises a trigger coupled to at least one of the controller and a source of shield gas that controls activation of the shield gas.
16. The handheld laser system of embodiment 15, wherein the trigger is a first trigger and the handheld apparatus further comprises a second trigger coupled to at least one of the controller and the laser source that controls activation of the laser source.
17. The handheld laser system of embodiment 16, wherein the first and second triggers are configured in a two-stage arrangement such that the second trigger will not activate the laser source unless the first trigger is activated.
18. The handheld laser system of embodiment 8, further comprising at least one movable mirror positioned within the housing, the at least one movable mirror configured to wobble the laser beam.
19. The handheld laser system of embodiment 1, wherein the laser beam has a power of at least 1 kW.
20. The handheld laser system of embodiment 19, wherein the laser beam has a power of about 1.5 kW.
21. The handheld laser system of embodiment 1, wherein the laser beam has a power within a range of 500 W to 3 kW inclusive.
22. The handheld laser system of embodiment 1, wherein the laser source is configured to:
   generate laser radiation in a continuous wave (CW) mode that has an output power; and
   generate laser radiation in a high peak power (HPP) mode characterized by having a maximum peak power that is less than twice the output power of the CW mode, a maximum duty cycle of about 20%, and a maximum pulse-repetition frequency of about 1500 Hz.
23. The handheld laser system of embodiment 1, wherein the wavelength is infrared (IR) light and the at least one optical filter is configured as an IR suppression filter.
24. A method, comprising:
   directing a laser beam from a laser source onto a workpiece material;
   activating a plasma sensor configured to detect plasma emitted from the workpiece material during a material processing operation;
   comparing an optical intensity value obtained by the plasma sensor to a threshold value at a time when a predetermined time period has elapsed after the material processing operation has commenced; and
   producing a control command based on the comparison.
25. The method of embodiment 24, wherein the control command powers off the laser source when the optical intensity value is lower than the threshold value and maintains power to the laser source when the optical intensity value is at or greater than the threshold value.
26. The method of embodiment 24, further comprising positioning at least one optical filter configured to block light at a wavelength of the laser source such that light at the wavelength of the laser source does not reach the plasma sensor.
27. The method of embodiment 24, further comprising providing a housing configured as a handheld apparatus having an outlet for the laser beam.
28. The method of embodiment 24, further comprising providing an optical fiber that couples the handheld apparatus to the laser source.
29. The method of embodiment 24, further comprising wobbling the laser beam.
30. A handheld laser system, comprising:
   a laser source configured to generate laser radiation at a wavelength for performing a material processing operation on a workpiece material with a laser beam of the generated laser radiation; and
   a housing configured as a handheld apparatus having an outlet for the laser beam, the handheld apparatus configured to be gas-cooled.
31. The handheld laser system of embodiment 30, further comprising an optical fiber coupling the handheld apparatus to the laser source.
32. The handheld laser system of embodiment 30, wherein the handheld apparatus is of one-piece construction.
33. The handheld laser system of embodiment 30, wherein the handheld apparatus is configured with a modular attachment system for a nozzle.
34. The handheld laser system of embodiment 30, further comprising an air-cooling system coupled to the laser source for dissipating heat.
35. The handheld laser system of embodiment 34, further comprising a laser module that houses the laser source, the air-cooling system, and the controller.
36. The handheld laser system of embodiment 35, wherein the laser module is configured to be mounted to a movable cart.
37. The handheld laser system of embodiment 30, wherein the laser beam has a power of at least 1 kW.

## Claims

1. A handheld laser system, comprising:
a laser source configured to generate laser radiation at a wavelength for performing a material processing operation on a workpiece material with a laser beam of the generated laser radiation;
a housing configured as a handheld apparatus having an outlet for the laser beam, the handheld apparatus configured with one or more inlets for a shielding gas so as to be gas-cooled, the shielding gas exiting the handheld apparatus at a gas outlet to provide the shielding gas to the workpiece material; and
an air-cooling system coupled to the laser source for dissipating heat from the laser source.

2. The handheld laser system of claim 1, further comprising an optical fiber coupling the handheld apparatus to the laser source.

3. The handheld laser system of claim 1, wherein the handheld apparatus is configured with a modular attachment system for a nozzle.

4. The handheld laser system of claim 1, further comprising a laser module that houses the laser source, the air-cooling system, and the controller.

5. The handheld laser system of claim 4, wherein the laser module is configured to be mounted to a movable cart.

6. The handheld laser system of claim 1, wherein the laser beam has a power of at least 1 kW.

7. The handheld laser system of claim 1, wherein the laser beam has a power within a range of 500 W to 3 kW inclusive.

8. The handheld laser system of claim 1, wherein the handheld apparatus is configured to weigh less than about 1 kilogram (kg).

9. The handheld laser system of claim 1, wherein the handheld apparatus comprises a trigger coupled to at least one of the controller and a source of the shielding gas that is configured to control activation of the shielding gas.

10. The handheld laser system of claim 9, wherein the trigger is a first trigger and the handheld apparatus further comprises a second trigger coupled to at least one of the controller and the laser source that is configured to control activation of the laser source.

11. The handheld laser system of claim 10, wherein the first and second triggers are configured in a two-stage arrangement such that the second trigger will not activate the laser source unless the first trigger is activated.

12. The handheld laser system of claim 1, further comprising at least one movable mirror positioned within the housing, the at least one movable mirror configured to wobble the laser beam.

13. The handheld laser system of claim 2, wherein the laser source comprises one or more laser diodes configured to generate the laser radiation that is propagated by the optical fiber.

14. The handheld laser system of claim 1, wherein the shielding gas is directed through one or more conduits within an interior of the handheld apparatus.

15. The handheld laser system of claim 1, wherein the laser source is configured to:
generate the laser radiation in a continuous wave (CW) mode that has an output power; and
generate the laser radiation in a high peak power (HPP) mode **characterized by** having a maximum peak power that is less than twice the output power of the CW mode, a maximum duty cycle of about 20%, and a maximum pulse-repetition frequency of about 1500 Hz.
